# EUROPEAN PATENT APPLICATION

(11) **EP 4 663 990 A1**
(43) Date of publication of application: **17.12.2025**
(21) Application number: 24752746.8
(22) Date of filing: 30.01.2024
(51) Int. Cl.: F16K 31/64, F16K 17/38

(54) **ANTI-FREEZE VALVE**

(30) Priority: 10.02.2023 CN 202310115668
(71) Applicant: Zhejiang Dunan Artificial Environment Co., Ltd., Shaoxing Zhejiang 311835 (CN)
(72) Inventor: YU, Zhou, Shaoxing, Zhejiang 311835 (CN); LOU, Xuanbo, Shaoxing, Zhejiang 311835 (CN); KANG, Zhijun, Shaoxing, Zhejiang 311835 (CN)
(74) Representative: Zermani Biondi Orsi, Umberto
(86) International application number: PCT/CN2024/074771
(87) International publication number: WO 2024/164890

(57) **Abstract**

Some embodiments of the present invention provide a freeze protection valve, the freeze protection valve includes: a valve seat, the valve seat is provided with a valve cavity and a valve port; a valve core, the valve core is movably arranged in the valve cavity to close or open the valve port; and a temperature sensing bulb, a temperature sensing bulb ejection rod of the temperature sensing bulb extends into the valve core to push the valve core to move toward the valve port. At least part of a temperature sensing part of the temperature sensing bulb extends out of the valve seat to extend into a to-be-detected medium.

## Description

The invention claims the priority to Chinese Patent Application No. 202310115668.X, filed with the China National Intellectual Property Administration on February 10, 2023 and entitled "Freeze protection valve".

### Technical Field

The invention relates to a technical field of freeze protection valves, and specifically relates to a freeze protection valve.

### Background

At present, a valve seat of a freeze protection valve is provided with a temperature sensing bulb. The valve is controlled to be opened and closed through water temperature sensing with the temperature sensing bulb. Thus, the valve can be ensured to be opened in time to discharge water from a pipe when a water temperature drops to a preset temperature, so as to prevent the pipe from bursting due to freezing of the water in the pipe.

However, there is a certain gap between the temperature sensed by the temperature sensing bulb in the valve seat and an actual water temperature in the pipe. This leads to inaccurate opening time of the freeze protection valve and influence on use reliability of the freeze protection valve.

### Summary

Some embodiments of the present invention provide a freeze protection valve, so as to solve a problem of low opening accuracy of a freeze protection valve in the art known to inventors.

In order to achieve the objective, the invention provides a freeze protection valve. The freeze protection valve includes: a valve seat, the valve seat is provided with a valve cavity and a valve port; a valve core, the valve core is movably arranged in the valve cavity to close or open the valve port; and a temperature sensing bulb, a temperature sensing bulb ejection rod of the temperature sensing bulb extends into the valve core to push the valve core to move toward the valve port. At least part of a temperature sensing part of the temperature sensing bulb extends out of the valve seat to extend into a to-be-detected medium.

Through the technical solution of the invention, the temperature sensing part of the temperature sensing bulb is located outside the valve seat and can directly extend into a flowing medium to sense a temperature of the flowing medium. Thus, temperature sensing accuracy of the temperature sensing part is improved. In this way, on one hand, the temperature sensing part arranged outside the valve seat can reduce a height of the valve seat to ensure that a temperature of the valve port is closer to the temperature of the flowing medium, such that the valve port is not prone to freezing, and use reliability of the freeze protection valve is improved. On the other hand, the temperature sensing part can obtain the temperature of the flowing medium more accurately to accurately control opening and closing timings of the freeze protection valve. Thus, the problem of low opening accuracy of the freeze protection valve in the art known to inventors is solved, and opening accuracy of the freeze protection valve is improved.

In the prior art, the freeze protection valve is provided with a temperature sensing bulb in a valve seat. Compared with that, the temperature sensing part of the temperature sensing bulb of the freeze protection valve in the invention is located outside the valve seat, such that the height of the valve seat can be reduced to reduce a distance between the valve port and the flowing medium. In this way, the temperature at the valve port is closer to the temperature of the flowing medium, and freezing is unlikely to occur. Further, the temperature sensing part can accurately obtain an actual temperature of the flowing medium, such that opening accuracy of the freeze protection valve is improved.

In some embodiments, the freeze protection valve further includes: an elastic structure. The elastic structure is arranged between the valve core and the valve seat, so as to apply an elastic force to the valve core to move away from the valve port.

In some embodiments, the valve port includes a conical hole section and a straight hole section that are in communication with each other. A hole diameter of the conical hole section gradually decreases in a direction from the conical hole section to the straight hole section.

In some embodiments, the valve core includes an insertion section. The insertion section is located at an end of the valve core. When at least part of the insertion section is inserted into the straight hole section, the valve port is closed.

In some embodiments, the freeze protection valve further includes: a first sealing structure. When the valve port is in a closed state, the first sealing structure is arranged between the valve core and the straight hole section.

In some embodiments, the valve seat includes: a sleeve body provided with a mounting hole and a communication hole. The mounting hole and the communication hole are provided in a spaced manner. At least part of a temperature sensing bulb body of the temperature sensing bulb penetrates the mounting hole. The valve seat further includes: a seat body connected to the sleeve body to define the valve cavity. The valve port is provided on the seat body. The valve cavity is in communication with the communication hole. A flow passage cross section of the communication hole is larger than a flow passage cross section of the valve port.

In some embodiments, the temperature sensing bulb is fixed to the mounting hole.

In some embodiments, one communication hole is provided. Or, a plurality of communication holes are provided. The plurality of communication holes are provided around the mounting hole in a spaced manner. A total flow passage cross section of all the communication holes is larger than the flow passage cross section of the valve port.

In some embodiments, the valve core is provided with a first hole section and a second hole section that are in communication with each other. An inner diameter of the first hole section is greater than an inner diameter of the second hole section. A joint of the first hole section and the second hole section is provided with a stepped surface. The stepped surface is used for limiting and stopping the temperature sensing bulb body of the temperature sensing bulb. An end surface of the temperature sensing bulb ejection rod farther from the temperature sensing bulb body is used for abutting against a bottom surface of the second hole section, so as to push the valve core to close the valve port.

In some embodiments, at least part of the temperature sensing bulb body extends into the first hole section, so as to slide in an extension direction of the first hole section.

In some embodiments, an outer diameter of the temperature sensing bulb body is matched with the inner diameter of the first hole section. An end of the temperature sensing bulb ejection rod farther from the temperature sensing bulb body is provided with an expanding section. An outer diameter of the expanding section is matched with the inner diameter of the second hole section.

### Brief Description of the Drawings

The accompanying drawings, constituting part of the description, are used to provide further understanding of the invention, and illustrative examples and their description of the invention serve to explain the invention instead of improperly limiting the invention. In the drawings:
Fig. 1 illustrates a cutaway view of an example of a freeze protection valve in a closed state according to the invention;
Fig. 2 illustrates a cutaway view of the freeze protection valve in Fig. 1 in an open state;
Fig. 3 illustrates a cutaway view of a sleeve body of the freeze protection valve in Fig. 1;
Fig. 4 illustrates a top view of the sleeve body in Fig. 3;
Fig. 5 illustrates a front view of a seat body of the freeze protection valve in Fig. 1;
Fig. 6 illustrates a schematic diagram of a cutaway view of the seat body in Fig. 5;
Fig. 7 illustrates a cutaway view of a valve core of the freeze protection valve in Fig. 1; and
Fig. 8 illustrates a top view of the valve core in Fig. 7.

The figures include the following reference numerals:
10, valve seat; 11, valve cavity; 12, valve port; 121, conical hole section; 122, straight hole section; 13, sleeve body; 131, mounting hole; 132, communication hole; 14, seat body; 20, valve core; 21, first hole section; 22, second hole section; 30, temperature sensing bulb; 31, temperature sensing bulb ejection rod; 311, expanding section; 32, temperature sensing part; 33, temperature sensing bulb body; 40, elastic structure; 50, first sealing structure; 60, second sealing structure.

### Detailed Description of the Embodiments

It should be noted that examples in the invention and features in the examples can be combined without conflicts. The invention will be described in detail below with reference to the accompanying drawings in conjunction with the examples.

It should be noted that all technical and scientific terms used in the invention have same meanings as commonly understood by those of ordinary skill in the art to which the invention belongs unless otherwise indicated.

In the invention, unless otherwise stated, the orientation words such as "upper" and "lower" are generally relative to directions shown in the drawings, or a vertical direction, a perpendicular direction or a gravity direction. Similarly, for convenience of understanding and description, "left" and "right" are generally left and right shown in the drawings; and "inside" and "outside" are inside and outside relative to an outline of each component itself, but the above orientation words are not used for limiting the invention.

In order to solve a problem of low opening accuracy of a freeze protection valve in the prior art, the invention provides a freeze protection valve.

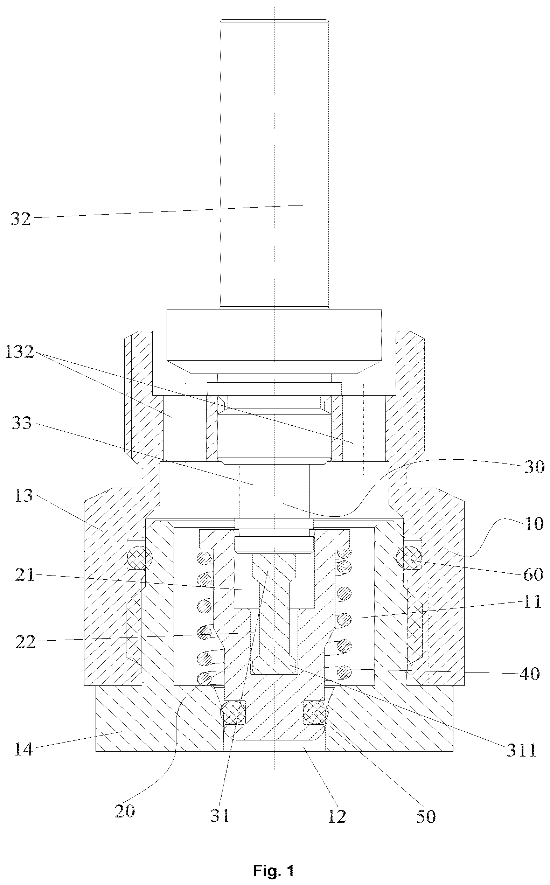

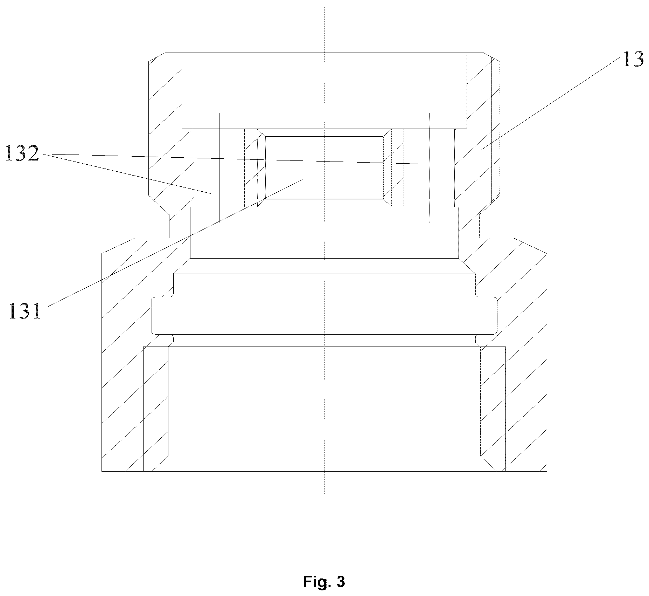

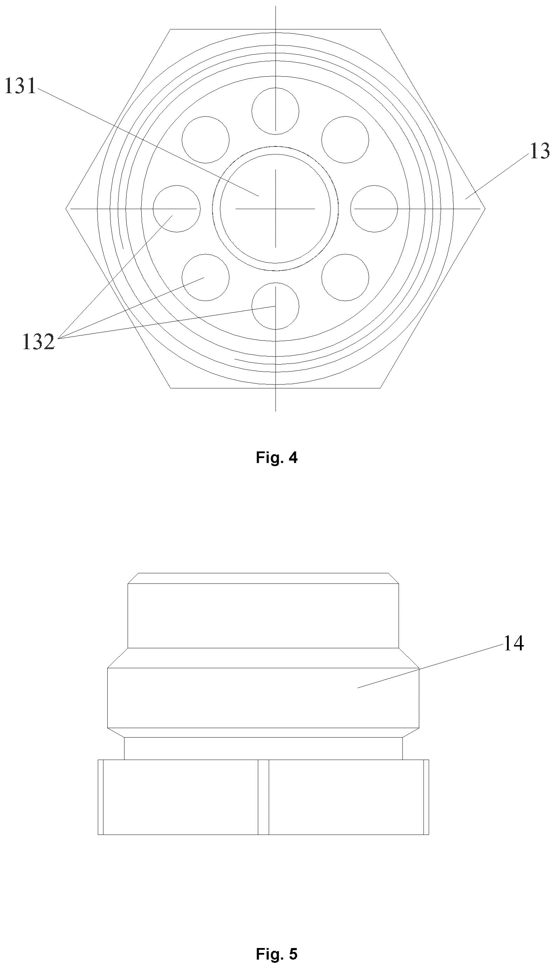

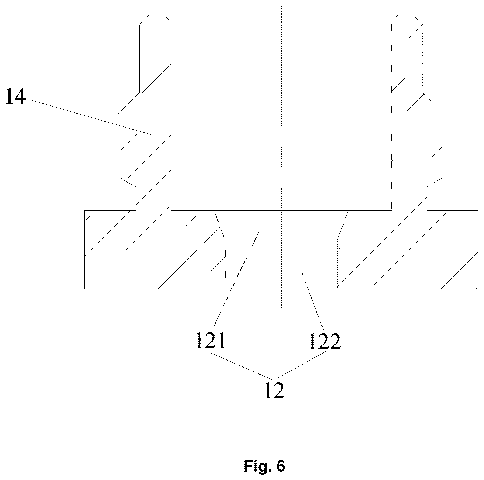

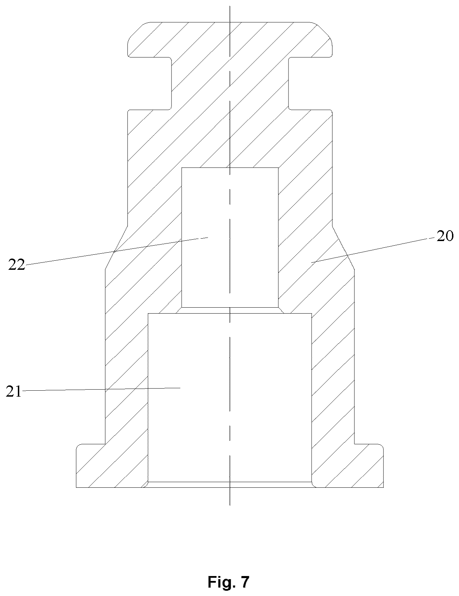

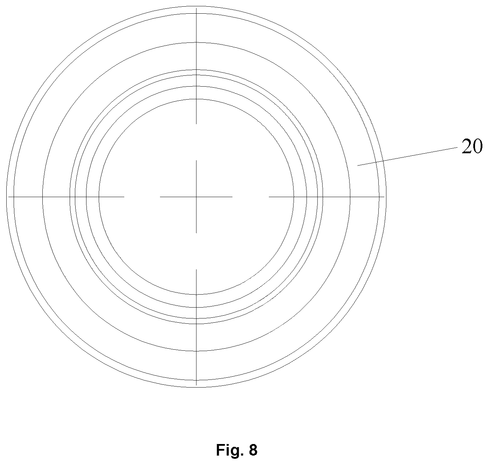

As shown in Fig. 1 to Fig. 8, the freeze protection valve includes a valve seat 10, a valve core 20, a temperature sensing bulb 30, and an elastic structure 40. The valve seat 10 is provided with a valve cavity 11 and a valve port 12. The valve core 20 is movably arranged in the valve cavity 11 to close or open the valve port 12. A temperature sensing bulb ejection rod 31 of the temperature sensing bulb 30 extends into the valve core 20 to push the valve core 20 to move toward the valve port 12. At least part of a temperature sensing part 32 of the temperature sensing bulb extends out of the valve seat 10 to extend into a to-be-detected medium.

Through the technical solution of the example, the temperature sensing part 32 of the temperature sensing bulb 30 is located outside the valve seat 10 and can directly extend into a flowing medium to sense a temperature of the flowing medium. Thus, temperature sensing accuracy of the temperature sensing part 32 is improved. In this way, on one hand, the temperature sensing part 32 arranged outside the valve seat 10 can reduce a height of the valve seat 10 to ensure that a temperature of the valve port 12 is closer to the temperature of the flowing medium, such that the valve port 12 is not prone to freezing, and use reliability of the freeze protection valve is improved. On the other hand, the temperature sensing part 32 can obtain the temperature of the flowing medium more accurately to accurately control opening and closing timings of the freeze protection valve. Thus, the problem of low opening accuracy of the freeze protection valve in the prior art is solved, and opening accuracy of the freeze protection valve is improved.

In the prior art, the freeze protection valve is provided with a temperature sensing bulb in a valve seat. Compared with that, the temperature sensing part 32 of the temperature sensing bulb 30 of the freeze protection valve in the example is located outside the valve seat 10, such that the height of the valve seat 10 can be reduced to reduce a distance between the valve port 12 and the flowing medium. In this way, the temperature at the valve port 12 is closer to the temperature of the flowing medium, and freezing is unlikely to occur. Further, the temperature sensing part 32 can accurately obtain an actual temperature of the flowing medium, such that opening accuracy of the freeze protection valve is improved.

As shown in Fig. 1, the freeze protection valve further includes the elastic structure 40. The elastic structure 40 is arranged between the valve core 20 and the valve seat 10, so as to apply an elastic force to the valve core 20 to move away from the valve port 12. In this way, through the arrangement of the elastic structure 40, the valve core 20 can automatically open the valve port 12, such that operation difficulty of workers is reduced.

In the example, the elastic structure 40 is a spring. In this way, when the temperature sensing bulb ejection rod 31 pushes the valve core 20 to move toward the valve port 12 so as to close the valve port 12, the freeze protection valve is closed and the elastic structure 40 is compressed. When the temperature sensing bulb ejection rod 31 retracts, the valve core 20 moves away from the valve port 12 under an elastic force of the elastic structure 40 so as to open the valve port 12, and the freeze protection valve is opened.

Specifically, when the temperature of the flowing medium obtained by the temperature sensing part 32 is less than or equal to a preset temperature value T1 (0°C≤T1≤3°C), the temperature sensing bulb ejection rod 31 retracts, the valve core 20 moves away from the valve port 12 under the elastic force of the elastic structure 40, and the freeze protection valve is opened. When the temperature of the flowing medium obtained by the temperature sensing part 32 is greater than or equal to a preset temperature value T2 (3°C<T2≤5°C), the temperature sensing bulb ejection rod 31 extends out to push the valve core 20 to move toward the valve port 12 so as to block the valve port 12, and the freeze protection valve is closed.

Specifically, during use of the freeze protection valve, the valve port 12 is close to an outdoor part, such that the temperature of the valve port 12 is close to an outdoor temperature. The temperature of the flowing medium in a pipe is greater than the outdoor temperature. The height of the valve seat 10 can be reduced to reduce the distance between the valve port 12 and the flowing medium, such that the temperature of the valve port 12 is closer to the temperature of the flowing medium, and a freeze protection effect of the freeze protection valve is improved.

As shown in Fig. 1, Fig. 2, and Fig. 6, the valve port 12 includes a conical hole section 121 and a straight hole section 122 that are in communication with each other. A hole diameter of the conical hole section 121 gradually decreases in a direction from the conical hole section 121 to the straight hole section 122. In this way, on one hand, a diameter of an end of the valve port 12 closer to the valve core 20 is greater than a diameter of the valve core 20, and the conical hole section 121 can guide the valve core 20, such that the valve core 20 can enter the valve port 12 conveniently, and further difficulty of opening and closing the freeze protection valve is reduced. On the other hand, when the freeze protection valve is in an open state, the conical hole section 121 can increase a flow speed of the flowing medium, and further a discharge speed of the freeze protection valve is improved.

In the example, a hole diameter of the straight hole section 122 is matched with the diameter of the valve core 20. When the freeze protection valve is in a closed state, the arrangement improves matching tightness of the straight hole section and the valve core, and prevents the flowing medium from flowing out through a matching gap between the straight hole section and the valve core, such that sealing reliability of the valve core 20 is further improved.

In the example, the valve core 20 includes an insertion section. The insertion section is located at an end of the valve core 20. When at least part of the insertion section is inserted into the straight hole section 122, the valve port 12 is closed. Specifically, the insertion section is of a cylindrical structure. The cylindrical structure extends into the straight hole section 122 to close the valve port 12. When the freeze protection valve is closed, the valve core 20 has no lower limit position, such that travel fluctuation of the temperature sensing bulb ejection rod 31 cannot influence sealing reliability of the valve core 20. Further, the freeze protection valve can be provided with various specifications of temperature sensing bulbs 30, such that processing difficulty of the freeze protection valve is reduced.

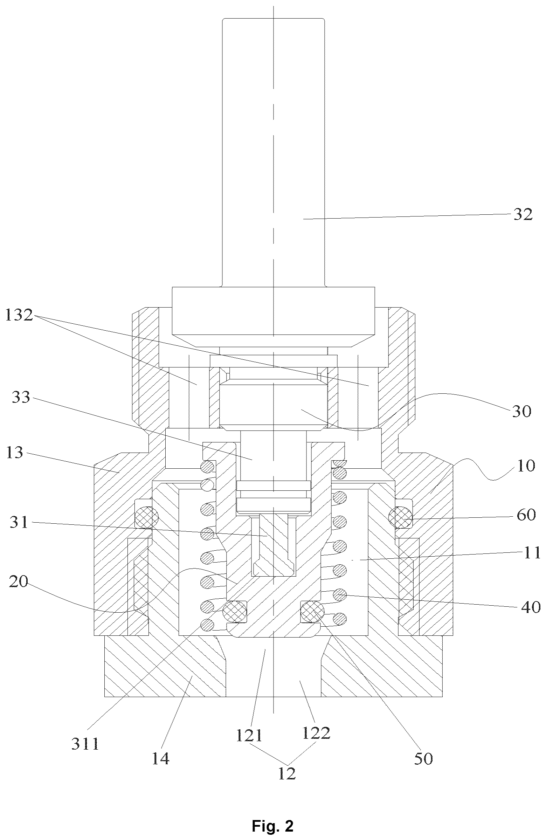

As shown in Fig. 1 and Fig. 2, the freeze protection valve further includes a first sealing structure 50. When the valve port 12 is in a closed state, the first sealing structure 50 is arranged between the valve core 20 and the straight hole section 122. In this way, the first sealing structure 50 can improve sealing reliability of the valve port 12, so as to avoid medium leakage caused by the fact that the flowing medium flows out through the valve port 12, and further sealing reliability of the valve core 20 is improved.

In the example, the first sealing structure 50 is an O-shaped sealing ring. The valve core 20 is provided with an accommodation recess. The O-shaped sealing ring is arranged on the accommodation recess of the valve core 20 in a sleeving manner. In this way, the arrangement causes the first sealing structure 50 to be in close contact with an inner peripheral surface of the valve port 12, so as to improve a sealing effect of the valve core 20 on the valve port 12.

As shown in Fig. 1 to Fig. 6, the valve seat 10 includes a sleeve body 13 and a seat body 14. The sleeve body 13 is provided with a mounting hole 131 and a communication hole 132. The mounting hole 131 and the communication hole 132 are provided in a spaced manner. At least part of a temperature sensing bulb body 33 of the temperature sensing bulb penetrates the mounting hole 131. The seat body 14 is connected to the sleeve body 13 to define the valve cavity 11. The valve port 12 is provided on the seat body 14. The valve cavity 11 is in communication with the communication hole 132. A flow passage cross section of the communication hole 132 is larger than a flow passage cross section of the valve port 12. In this way, on one hand, the temperature sensing bulb 30 can be mounted on the valve seat 10 through the mounting hole 131, such that a temperature-sensing starting function of the freeze protection valve is achieved. On the other hand, the communication hole 132 and the valve port 12 on the seat body 14 form a medium passage so as to achieve a discharge function of the freeze protection valve. Meanwhile, the flow passage cross section of the communication hole 132 is larger than the flow passage cross section of the valve port 12, such that a flow rate of the communication hole 132 of the freeze protection valve is greater than a flow rate of the valve port 12, so as to adapt to valve ports with greater specifications.

In the example, the second sealing structure 60 is sleeved with the sleeve body 13. In this way, after the sleeve body 13 and the seat body 14 are assembled, the second sealing structure 60 sleeved with the sleeve body 13 can be in close contact with an inner peripheral surface of the seat body 14, such that matching tightness between the sleeve body 13 and the seat body 14 is improved, the flowing medium in the valve seat 10 is prevented from flowing out through a matching gap between the sleeve body and the seat body, and sealing reliability of the freeze protection valve is improved.

Specifically, a large enough gap is provided between the valve core 20 and the inner peripheral surface of the seat body 14 to improve circulating capacity of the flowing medium in the valve seat 10. Thus, the freeze protection valve can support the valve port 12 with a large specification, and universality of the freeze protection valve is further improved.

In the example, the temperature sensing bulb 30 is fixed to the mounting hole 131. In this way, the arrangement can prevent the temperature sensing bulb body 33 from jumping or moving in the valve seat 10 to influence structural stability of the freeze protection valve.

Optionally, the mounting hole 131 is clamped, bonded, screwed or connected to the temperature sensing bulb 30 through a fastener. In this way, the temperature sensing bulb 30 fixedly mounted in the mounting hole 131 can limit a movement direction of the temperature sensing bulb ejection rod 31. Thus, workers do not need to consider guidance of the temperature sensing bulb 30, and design difficulty of the workers is reduced. Meanwhile, the arrangement makes a mounting mode of the temperature sensing bulb 30 more flexible and diverse to adapt to different working conditions and use requirements, and improves processing flexibility of the workers.

In the example, the mounting hole 131 is connected to the temperature sensing bulb 30 in a threaded manner. In this way, the arrangement causes the temperature sensing bulb 30 to be detachably mounted in the mounting hole 131, such that the workers can conveniently repair and check the freeze protection valve later.

Specifically, an inner peripheral surface of the mounting hole 131 is provided with an inner thread, and an outer peripheral surface of the temperature sensing bulb 30 is provided with an outer thread, such that the workers can complete assembly and disassembly of the temperature sensing bulb 30 only by screwing the temperature sensing bulb 30 clockwise or counterclockwise, and operation difficulty of the workers is reduced.

Optionally, one communication hole 132 is provided. Or, a plurality of communication holes 132 are provided. The plurality of communication holes 132 are provided around the mounting hole 131 in a spaced manner. A total flow passage cross section of all the communication holes 132 is larger than the flow passage cross section of the valve port 12. In this way, the arrangement ensures that the flow rate of the communication hole 132 is greater than the flow rate of the valve port 12, so as to support the valve port 12 with a greater specification. Thus, universality of the freeze protection valve is improved. Meanwhile, the arrangement makes number selection of communication holes 132 more flexible and diverse to adapt to different working conditions and use requirements, and improves processing flexibility of the workers. When the plurality of communication holes 132 are provided, an area of each of the communication holes 132 is reduced, and the plurality of communication holes 132 are distributed around the mounting hole 131, such that more space can be left for providing the mounting hole 131. Thus, when a size of the mounting hole 131 is determined, the arrangement of the plurality of communication holes 132 facilitates reduction in size of the valve seat 10.

In the example, a number of communication holes 132 is eight, and the eight communication holes 132 are arranged around the mounting hole 131 in a spaced manner. In this way, on one hand, the arrangement can ensure that the total the flow passage cross section of all the communication holes 132 is larger than the flow passage cross section of the valve port 12, so as to improve universality of the freeze protection valve. On the other hand, flowing media in the valve seat 10 are distributed more uniformly, such that mutual interference of the flowing media flowing out through all the communication holes 132 is avoided, and a flowing speed of the flowing media in the freeze protection valve is increased.

It should be noted that the number of communication holes 132 is not limited herein, and can be adjusted according to the working conditions and the use requirements. Optionally, the number of communication holes 132 is one, two, three, four, five, six, or more.

As shown in Fig. 1, Fig. 2, Fig. 7, and Fig. 8, the valve core 20 is provided with a first hole section 21 and a second hole section 22 that are in communication with each other. An inner diameter of the first hole section 21 is greater than an inner diameter of the second hole section 22. Ajoint of the first hole section 21 and the second hole section 22 is provided with a stepped surface. The stepped surface is used for limiting and stopping the temperature sensing bulb body 33 of the temperature sensing bulb 30. An end surface of the temperature sensing bulb ejection rod 31 farther from the temperature sensing bulb body 33 is used for abutting against a bottom surface of the second hole section 22, so as to push the valve core 20 to close the valve port 12. **In** this way, on one hand, the arrangement limits and stops the temperature sensing bulb body 33 through the stepped surface to limit a movement range of the valve core 20 and ensure a proper opening degree of the valve port 12. On the other hand, the temperature sensing bulb ejection rod 31 can push the bottom surface of the second hole section 22 to drive the valve core 20 to move, so as to achieve a blocking function of the valve core 20. Meanwhile, the arrangement makes a structure of the valve core 20 simpler and easier to process and implement, so as to reduce processing difficulty of workers.

In the example, the inner diameter of the first hole section 21 is matched with an outer diameter of the temperature sensing bulb body 33, and the inner diameter of the second hole section 22 is matched with an outer diameter of the temperature sensing bulb ejection rod 31. In this way, the arrangement causes the first hole section 21 to guide the temperature sensing bulb body 33, and causes the second hole section 22 to guide the temperature sensing bulb ejection rod 31, so as to ensure the temperature sensing bulb 30 to move in a preset direction. Thus, operation reliability of the freeze protection valve is improved.

As shown in Fig. 1 and Fig. 2, at least part of the temperature sensing bulb body 33 extends into the first hole section 21, so as to slide in an extension direction of the first hole section 21. In this way, the first hole section 21 limits a sliding direction of the temperature sensing bulb body 33, so as to limit the movement direction of the temperature sensing bulb ejection rod 31. Further, internal positioning of the valve core 20 is implemented through matching of the temperature sensing bulb ejection rod 31 and the valve core 20, so as to ensure that the valve core 20 can block or open the valve port 12. Thus, operation reliability of the freeze protection valve is further improved.

Optionally, the freeze protection valve further includes a matching component. The matching component includes a first matching part and a second matching part. The first matching part is arranged on the temperature sensing bulb body 33, and the second matching part is arranged on a hole wall of the second hole section 22. One of the first matching part and the second matching part is a protrusion, and the other of the first matching part and the second matching part is a recess. The protrusion extends into the recess and can slide in an extension direction of the recess. The extension direction of the recess is consistent with an extension direction of the second hole section 22. **In** this way, the arrangement limits a movement direction of the temperature sensing bulb body 33 through the first matching part and the second matching part. Further, internal positioning accuracy of the valve core 20 is improved, so as to ensure that the valve core 20 can block or open the valve port 12. Thus, operation reliability of the freeze protection valve is further improved. Meanwhile, the arrangement makes a method for improving internal positioning accuracy of the valve core 20 simpler, so as to reduce processing difficulty of workers.

In the example, the first matching part is a protrusion and the second matching part is a recess. The first matching part extends into the second matching part to slide in an extension direction of the second matching part. **In** this way, on one hand, matching of the protrusion and the recess can limit the movement range of the valve core 20 to implement internal positioning of the valve core 20. On the other hand, the valve core 20 can slide in an extension direction of the recess, such that a blocking function of the valve core 20 is achieved.

In other embodiments not shown in the drawings, the first matching part is a recess and the second matching part is a protrusion. The second matching part extends into the first matching part to slide in an extension direction of the first matching part.

In the example, the freeze protection valve further includes an anti-friction layer. The anti-friction layer is arranged between a hole wall of the second hole section 22 and the temperature sensing bulb body 33. In this way, the arrangement can avoid damage of the temperature sensing bulb body 33 and the second hole section 22 caused by repeated friction between the temperature sensing bulb body and the second hole section, so as to prolong service life of the temperature sensing bulb 30 and the valve core 20.

As shown in Fig. 1, the outer diameter of the temperature sensing bulb body 33 is matched with the inner diameter of the first hole section 21. An end of the temperature sensing bulb ejection rod 31 farther from the temperature sensing bulb body 33 is provided with an expanding section 311. An outer diameter of the expanding section 311 is matched with the inner diameter of the second hole section 22. **In** this way, the arrangement achieves a function of guiding and positioning the temperature sensing bulb ejection rod 31 and the temperature sensing bulb body 33 together with the valve core 20, that is, positioning two parts of the temperature sensing bulb 30 to the valve core 20. Thus, movement stability of the valve core 20 is further improved.

From the above description, it can be seen that the examples of the invention achieve the following technical effects:
The temperature sensing part of the temperature sensing bulb is located outside the valve seat and can directly extend into the flowing medium to sense the temperature of the flowing medium. Thus, temperature sensing accuracy of the temperature sensing part 32 is improved. **In** this way, on one hand, the temperature sensing part arranged outside the valve seat can reduce the height of the valve seat to ensure that the temperature of the valve port is closer to the temperature of the flowing medium, such that the valve port is not prone to freezing, and use reliability of the freeze protection valve is improved. On the other hand, the temperature sensing part can obtain the temperature of the flowing medium more accurately to accurately control opening and closing timings of the freeze protection valve. Thus, the problem of low opening accuracy of the freeze protection valve in the prior art is solved, and opening accuracy of the freeze protection valve is improved.

In the prior art, the freeze protection valve is provided with a temperature sensing bulb in a valve seat. Compared with that, the temperature sensing part of the temperature sensing bulb of the freeze protection valve in the invention is located outside the valve seat, such that the height of the valve seat can be reduced to reduce a distance between the valve port and the flowing medium. In this way, the temperature at the valve port is closer to the temperature of the flowing medium, and freezing is unlikely to occur. Further, the temperature sensing part can accurately obtain an actual temperature of the flowing medium, such that opening accuracy of the freeze protection valve is improved.

Obviously, the examples described above are merely some examples rather than all examples of the invention. Based on the examples of the invention, all other examples obtained by those of ordinary skill in the art without making creative efforts should fall within the protection scope of the invention.

It should be noted that the terms used herein are merely for describing specific embodiments and are not intended to limit illustrative embodiments according to the invention. As used herein, the singular is also intended to include the plural unless the context clearly points out the singular or plural. In addition, it should be understood that terms "include" and/or "comprise" used in the description indicate the presence of features, steps, operations, devices, components, and/or their combinations.

It should be noted that the terms such as "first" and "second" in the description and claims of the invention and in the drawings are used to distinguish between similar objects and not necessarily to describe a particular order or sequential order. It should be understood that data used in this way can be interchanged where appropriate, such that the embodiments of the invention described herein can be implemented in other orders than those illustrated or described herein.

What are described above are merely preferred examples of the invention and are not intended to limit the invention, and various changes and modifications can be made by those skilled in the art. Any modifications, equivalent substitutions, improvements, etc. made within the spirit and principle of the invention should fall within the protection scope of the invention.

## Claims

1. A freeze protection valve, wherein comprising:
a valve seat (10), the valve seat (10) is provided with a valve cavity (11) and a valve port (12);
a valve core (20), the valve core (20) is movably disposed in the valve cavity (11) to close or open the valve port (12); and
a temperature sensing bulb (30), a temperature sensing bulb ejection rod (31) of the temperature sensing bulb (30) extends into the valve core (20) to push the valve core (20) to move toward the valve port (12), wherein
at least a part of a temperature sensing part (32) of the temperature sensing bulb (30) extends out of the valve seat (10) to extend into a to-be-detected medium.

2. The freeze protection valve as claimed in claim 1, wherein the freeze protection valve further comprises:
an elastic structure (40), the elastic structure (40) is disposed between the valve core (20) and the valve seat (10) and is configured to apply an elastic force to the valve core (20) to move away from the valve port (12).

3. The freeze protection valve as claimed in claim 1, wherein the valve port (12) comprises a conical hole section (121) and a straight hole section (122) which are in communication with each other, and a hole diameter of the conical hole section (121) gradually decreases in a direction from the conical hole section (121) to the straight hole section (122).

4. The freeze protection valve as claimed in claim 3, wherein the valve core (20) comprises an insertion section, the insertion section is disposed at an end of the valve core (20), and when at least part of the insertion section is inserted into the straight hole section (122), the valve port (12) is closed.

5. The freeze protection valve as claimed in claim 3, wherein the freeze protection valve further comprises:
a first sealing structure (50), when the valve port (12) is in a closed state, the first sealing structure (50) is disposed between the valve core (20) and the straight hole section (122).

6. The freeze protection valve as claimed in claim 1, wherein the valve seat (10) comprises:
a sleeve body (13), the sleeve body (13) is provided with a mounting hole (131) and a communication hole (132), and the mounting hole (131) and the communication hole (132) are disposed in a spaced manner; at least part of a temperature sensing bulb body (33) of the temperature sensing bulb (30) penetrates the mounting hole (131); and
a seat body (14), the seat body (14) is connected with the sleeve body (13) to define the valve cavity (11), the valve port (12) is disposed on the seat body (14), and the valve cavity (11) is in communication with the communication hole (132), wherein
a flow passage cross section of the communication hole (132) is larger than a flow passage cross section of the valve port (12).

7. The freeze protection valve as claimed in claim 6, wherein the temperature sensing bulb (30) is fixed to the mounting hole (131).

8. The freeze protection valve as claimed in claim 6, wherein one communication hole (132) is provided; or a plurality of communication holes (132) are provided, the plurality of communication holes (132) are disposed around the mounting hole (131) in a spaced manner, and a total flow passage cross section of all the communication holes (132) is larger than the flow passage cross section of the valve port (12).

9. The freeze protection valve as claimed in claim 1, wherein the valve core (20) is provided with a first hole section (21) and a second hole section (22) which are in communication with each other, an inner diameter of the first hole section (21) is greater than an inner diameter of the second hole section (22), a joint of the first hole section (21) and the second hole section (22) is provided with a stepped surface, and the stepped surface is configured to limit and stop the temperature sensing bulb body (33) of the temperature sensing bulb (30); and an end surface of the temperature sensing bulb ejection rod (31) farther from the temperature sensing bulb body (33) is configured to abutting against a bottom surface of the second hole section (22), so as to push the valve core (20) to close the valve port (12).

10. The freeze protection valve as claimed in claim 9, wherein at least part of the temperature sensing bulb body (33) extends into the first hole section (21), so as to slide in an extension direction of the first hole section (21).

11. The freeze protection valve as claimed in claim 9, wherein an outer diameter of the temperature sensing bulb body (33) is matched with the inner diameter of the first hole section (21), an end of the temperature sensing bulb ejection rod (31) farther from the temperature sensing bulb body (33) is provided with an expanding section (311), and an outer diameter of the expanding section (311) is matched with the inner diameter of the second hole section (22).
